Europäisches Patentamt

European Patent Office

Office européen des brevets

(11) Publication number: **0 303 430 B1**

(12) **EUROPEAN PATENT SPECIFICATION**

(45) Date of publication of patent specification: **22.12.93**

(51) Int. Cl.5: **C09J 133/08**, C08L 33/08, C08F 2/48, C09J 7/02

(21) Application number: **88307317.3**

(22) Date of filing: **08.08.88**

(54) **Pressure-sensitive adhesive.**

(30) Priority: **14.08.87 US 85938**

(43) Date of publication of application:
**15.02.89 Bulletin 89/07**

(45) Publication of the grant of the patent:
**22.12.93 Bulletin 93/51**

(84) Designated Contracting States:
**DE ES FR GB IT SE**

(56) References cited:
FR-A- 2 284 658
US-A- 4 599 265

(73) Proprietor: **MINNESOTA MINING AND MANU-FACTURING COMPANY**
**3M Center,**
**P.O. Box 33427**
**St. Paul, Minnesota 55133-3427(US)**

(72) Inventor: **Martin, Michael K.**
**Minnesota Mining & Manufacturing Co.**
**2501 Hudson Road, St.Paul, MN**
**55133-3427(US)**
Inventor: **Moon, John D.**
**Minnesota Mining & Manufacturing Co.**
**2501 Hudson Road, St.Paul, MN**
**55133-3427(US)**
Inventor: **Stark, Francis M., Jr.**
**Minnesota Mining & Manufacturing Co.**
**2501 Hudson Road, St.Paul, MN**
**55133-3427(US)**

(74) Representative: **Baillie, Iain Cameron et al**
**c/o Ladas & Parry**
**Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 303 430 B1

## Description

Field of the Invention

This invention relates to acrylic pressure-sensitive adhesives and adhesive tapes cured by ultraviolet radiation.

Description of the Related Art

The acrylate copolymer pressure-sensitive adhesives, with which the present invention is concerned, are well-known in the art (see for example in U.S. Patent No. Re. 24,906 Ulrich). They are generally copolymers of a major proportion of alkyl esters of acrylic acid (the alkyl group containing from about four to fourteen carbon atoms) and a minor proportion of at least one modifying monomer such as acrylic acid, methacrylic acid, acrylamide, acrylonitrile, methacrylonitrile, N-substituted acrylamides, hydroxy acrylates, N-vinyl pyrrolidone, maleic anhydride or itaconic acid. They are among the most widely utilized adhesives in the manufacture of pressure-sensitive tapes for a variety of reasons including the ready availability and relatively low cost of the monomeric precursors which react easily to form copolymers that possess a good balance of tack, peel, and shear properties.

U.S.-A-4,181,752 (Martens et al.) discloses a process for making pressure-sensitive adhesive tape which involves the photopolymerization of the alkyl esters of acrylic acid and the modifying monomers to form the acrylate copolymer. Martens et al. disclose that the intensity and spectral distribution of the irradiation must be controlled in order to attain desirably high cohesive strength and also to attain high peel resistance. It teaches that the polymerizable mixture should be subjected to radiation in the near ultraviolet region at a rate of irradiation in the 300-400 nanometer wavelength range of not more than 7 milliwatts per square centimeter of the mass exposed. Any radiation shorter than 300 nanometers is limited to not more than about 10% of the energy in the 300-400 nanometers. The irradiation is preferably carried out in the absence of air and oxygen which inhibit the polymerization reaction. Thus, it is normally carried out in an inert atmosphere such as nitrogen, carbon dioxide, helium, argon, etc. Air can also be excluded by sandwiching the liquid polymerizable mixture between layers of solid sheet material and irradiating through the sheet material.

Additional patents further disclose ultraviolet radiation polymerization of acrylate adhesives using the process of Martens et al. U.S.-A-4,303,485 (Levens) discloses the addition of an oxidizable tin salt to the polymerizable mixture which is to be subjected to ultraviolet radiation polymerization to permit polymerization of thick layers in the presence of oxygen and to allow an unusual tolerance of oxygen when polymerizing thin layers. U.S.-A-4,364,972 (Moon) discloses the use of 15 to 50 parts by weight N-vinyl pyrrolidone as the modifying monomer in the ultraviolet radiation polymerizable mixture to provide a pressure-sensitive adhesive tape which has both high adhesion and high cohesion values and adheres strongly to automotive paints and to rubber and plastic foam layers. U.S.-A-4,391,687 (Vesley) discloses the use of specified chromophore-substituted-halomethyl-s-triazines as photoactive crosslinking agents in the ultraviolet radiation polymerizable monomer mixture with these triazines having good solubility in the monomer mixture and reduced tendency to yellowing and providing improved tolerance to oxygen during polymerization. U.S.-A-4,599,265 (Esmay) discloses a readily peelable pressure-sensitive adhesive tape, the adhesive layer of which is an ultraviolet radiation polymerized alkyl acrylate polymer which is crosslinked and nearly free from polar substituents. These patents also suggest that such conventional additives as tackifiers may be included in the adhesive, but do not exemplify this teaching.

The above-cited Moon patent, which concerns pressure-sensitive adhesive designed especially to provide enhanced adhesion to automotive paints, teaches that tackifiers can be blended into the photoactive mixtures of monomers from which those pressure-sensitive adhesives are photopolymerized, but warns that "the addition of any such material adds complexity and hence expense to an otherwise simple, straight forward, economical process and is not preferred except to achieve specific results" (col. 6, lines 3-12). The Moon patent does not exemplify this teaching. However, the introduction of a tackifier into a photopolymerizable mixture of monomers often interferes with the polymerization and prevents the attainment of the desired adhesive and cohesive properties.

U.S.-A-4,243,500 (Glennon) discloses a pressure-sensitive adhesive formed from a composition comprising mono-functional unsaturated acrylate ester monomer, essentially saturated tackifying resin polymer dissolved in the acrylate ester, non-crystallizing elastomeric material also dissolved in the acrylate ester, and an initiator responsive to ultraviolet light or other penetrating radiation such as electron beam, gamma, or X-ray radiation. Glennon discloses use of ultraviolet light within a wavelength range of betweeen 180 and 400 nm (1800 and 4000 Angstroms) and desirably between 350 and 360 nm (3500 and 3600 Angstroms). The adhesive composition is coated on a substrate and exposed to 78.7 watt per cm (200 watt per inch) ultraviolet lamps. The intensity of these 78.7 watt per cm (200 watt per inch) lamps taught by Glennon is much greater than the lamps disclosed by Martens et al. which provide an intensity of about 0.39 watt per lineal centimetre) (about 1 watt per lineal inch). Glennon discloses that the essentially saturated tackifying resin polymer can be a substance or mixture of substances selected from the group consisting of esters of rosin, hydrogenated esters of rosin, modified rosin esters, esters of polymerized rosin, esters of hydrogenated rosin, hydrocarbon resin, linear homo polymers of alpha-methyl styrene, alpha-pinene terpene hydrocarbon resin, aromatic modified C-5 hydrocarbon resin, vinyltoluene alpha methyl styrene co-polymer resins, beta-pinene terpene resins, polycyclic hydrocarbon resins and technical hydroabietyl alcohol. However, many of these essentially saturated resin polymers are unsuitable for use in the curing method of the above-cited Martens patent due to incompatibility, which results in phase separation of the tackifying resin from the monomer mixture, excessive UV absorption which retards the photochemical reaction, and high reactivity with the monomers such that polymerization of the monomers is impeded.

U.S.-A-4,500,683 (Hori et al.) discloses a pressure-sensitive adhesive composition containing as a polymer component, an addition-polymerization polymer of an acryl-based polymer having sticking properties at room temperature and one or more ethylenically unsaturated monomers capable of forming a homo- or co-polymer having a glass transition point of at least 273° K. The addition-polymerization polymer is prepared by polymerizing one or more ethylenically unsaturated monomers in the presence of the acryl-based polymer by solution polymerization or bulk polymerization using radical polymerization catalysts, but polymerization can be initiated by energy in the form of light, electron rays, etc. Compounding agents such as a coloring agent, a filler, an anti-aging agent, a tackifier, etc. can be added.

U.S.-A-4,418,120 (Kealy et al.) discloses a pressure-sensitive adhesive tape which is made by coating a sheet backing with a solution of isooctyl acrylate:acrylic acid copolymer containing a tackifying rosin ester and an antioxidant, evaporating the solvent, and crosslinking the adhesive. U.S.-A-4,645,711 (Winslow et al.) discloses a removable pressure-sensitive adhesive tape, the adhesive layer of which is an emulsion polymerized copolymer of alkyl acrylate such as isooctyl acrylate and a small amount of emulsifier monomer and a tackifying resin selected from hydrogenated rosin esters, polyterpene, polymerized alkyl styrene, and polymerized petroleum-derived monomer resins. Although tackifying resins, such as the rosin esters have been successfully used with solution and emulsion polymerized acrylate pressure-sensitive adhesives and polyterpene, polymerized alkyl styrene, and polymerized petroleum-derived monomer resins can be used with emulsion polymerized acrylate pressure-sensitive adhesives, most of these tackifying resins are unsuitable for use in in situ polymerized acrylate pressure-sensitive adhesives.

Although acrylate adhesives generally have a good balance of tack, peel, and shear properties, an increase in these properties is desirable for the more demanding applications such as, for example, those applications requiring adhesion to low energy substrates such as polyethylene and polypropylene, and high solids automotive paint systems which are coming into widespread use to reduce air polution. The tack property relates to the adhesive's ability to adhere quickly, the peel property relates to the adhesive's ability to resist removal by peeling, and the shear property relates to the adhesive's ability to hold in position when shear forces are exerted. Generally, the tack and peel properties are directly related to each other but are inversely related to the shear property. Often, if an adhesive is modified to increase tack, its resistance to shear is lowered, and commonly an increase in shear resistance is accompanied by a reduction in tack. (See U.S.-A-4,077,926, Sanderson et al.)

## Summary of the Invention

The invention provides a pressure-sensitive adhesive comprising;
(a) 50 to 95 parts by weight of an ultraviolet radiation polymerized polymer of (i) one or more monomers which are alkyl acrylates, the alkyl groups of which have an average of 4 to 12 carbon atoms and (ii) from 2 to 15 parts by weight of 100 parts of said ultraviolet radiation polymerized polymer of one or more strongly polar copolymerizable monomers selected from acrylic acid, itaconic acid, hydroxyalkyl acrylates, cyanoalkyl acrylates, acrylamides and substituted acrylamides or from 5 to 30 parts by weight of 100 parts of said ultraviolet radiation polymerized polymer of one or more moderately polar copolymerizable monomers selected from N-vinyl pyrrolidone, N-vinyl caprolactam, acrylonitrile, vinyl chloride, vinylidene chloride and diallyl phthalate; further comprising from 0.01 to 1 weight percent of a crosslinking agent based on the weight of the polymerizable monomers and tackifying agent; and (b) 5 to 50 parts by weight of anionically polymerized poly (t-butyl styrene) tackifying resin, and said adhesive having a monomer conversion factor of at least 95%.

The adhesive also has an improved peel strength over a comparable untackified adhesive, preferably demonstrating an increase of at least 50%, more preferably 100%, most preferably 200%.

In preferred embodiments of the invention, e.g., when the adhesive comprises the specified tackifying resin and the polymerized polymer of an alkyl acrylate and a moderately polar copolymerizable monomer, such as N-vinyl pyrrolidone, excellent shear strength, i.e., preferably at least 100 min., more preferably at least 500 min., and most preferably at least 10,000 min., can be obtained.

Detailed Description of the Invention

The alkyl acrylate monomers useful in this invention are preferably monofunctional unsaturated acrylate ester monomers. Included within this class of monomers are, for example, isooctyl acrylate, 2-ethyl hexyl acrylate, decyl acrylate, dodecyl acrylate, butyl acrylate and hexyl acrylate. The alkyl acrylate monomers are copolymerized with polar copolymerizable monomers. When strongly polar copolymerizable monomers are copolymerized with the alkyl acrylate monomer, the strongly polar copolymerizable monomer comprises from 2 to 15 parts by weight of the ultraviolet radiation polymerized polymer and the alkyl acrylate monomer generally comprises at least 85 parts by weight of the ultraviolet radiation polymerized polymer. When moderately polar copolymerizable monomers are copolymerized with the alkyl acrylate monomer, the moderately polar copolymerizable monomer comprises from 5 to 30 parts by weight of the ultraviolet radiation polymerized polymer and the alkyl acrylate monomer generally comprises at least 70 weight of the ultraviolet radiation polymerized polymer.

When the polar copolymerizable monomers are strongly polar copolymerizable monomers they are selected from acrylic acid, itaconic acid, hydroxyalkyl acrylates, cyanoalkyl acrylates, acrylamides and substituted acrylamides, and when the polar copolymerizable monomers are moderately polar copolymerizable monomers they are selected from N-vinyl pyrrolidone, N-vinyl caprolactam, acrylonitrile, vinyl chloride, vinylidene chloride and diallyl phthalate. The strongly polar copolymerizable monomer comprises from 2 to 15 parts by weight, preferably 2 to 5 parts by weight, of 100 parts of the ultraviolet radiation polymerized polymer. The moderately polar copolymerizable monomer comprises 5 to 30 parts by weight, of 100 parts of the ultraviolet radiation polymerized polymer. Generally, when greater amounts of moderately polar copolymerizable monomer, i.e., approaching 15 parts by weight, are used, a good balance of adhesive properties can be achieved using greater amounts of tackifying resin, although for a given system, adhesive properties are diminished with excessive amounts of tackifying resin in the system. The maximum relative amounts of components can be readily determined with minimal experimentation.

The polymerizable composition may further include nonpolar or slightly polar copolymerizable monomers such as butadiene or isoprene as long as such monomers do not interfere with the properties of the polymer.

The tackifying resin useful in this invention is anionically polymerized poly t-butyl styrene.

The tackifying resin comprises 5 to 50 parts by weight preferably 15 to 35 parts by weight of 100 parts of the pressure-sensitive adhesive.

The tackifying resins should also cause minimal inhibition of the ultraviolet curing of the adhesive, i.e., the resin should not act as a chain terminator during polymerization of the acrylate monomers. Thus, those resins having active hydrogen atoms, olefinic functionality, or halogen catalyst residues which act as chain terminators, are unsuitable for use in the present invention. For example, cationically polymerized t-butyl styrene which has end-group olefinic unsaturation, active hydrogen atoms, and halogen catalyst residues is unsuitable, while anionically polymerized t-butyl styrene in which these functional groups are not present is suitable.

The tackifying resin should permit the acrylate monomer mixture to polymerize with a conversion factor of acrylate monomer to polymer in the presence of the tackifying resin of at least 95%, more preferably about 98%, most preferably about 100% when a 125-micron thick layer of the adhesive composition, i.e., the acrylate monomer, the polar copolymerizable monomer, the tackifying agent, and the photoinitiator is coated between two 50-micron thick polyethylene terephthalate films having release coatings thereon and the coated adhesive is polymerized using ultraviolet radiation at a rate of 1 milliwatt per second per square centimeter ($mW/sec/cm^2$) for a period of 2 minutes. The conversion factor, i.e., the extent of polymerization, can be monitored by measuring the refractive index of the polymerized mixture. For example, the refractive index may change from about 1.43 for a partially polymerized monomer mixture to about 1.50 at about 100% reaction. The change in refractive index occurs linearly with conversion of the unsaturated moieties. See, for example, discussions about the method in Polymerization at Advanced Degrees of Conversion, G.P. Gladyshev and K. M. Gibov, Keter Press, Jerusalem 1970, pp. 20-28.

EP 0 303 430 B1

The mixture of the alkyl acrylate monomer, the polar copolymerizable monomer, and the tackifying resins may also contain a photoinitiator to aid in polymerization of the monomers. Photoinitiators which are useful for polymerizing the acrylate monomer and the optional polar copolymerizable monomer include the benzoin ethers such as benzoin methyl ether or benzoin isopropyl ether, substituted benzoin ethers such as anisoin methyl ether, substituted acetophenones such as 2,2-diethoxyacetophenone and 2,2-dimethoxy-2-phenylacetophenone, substituted alpha-ketols such as 2-methyl-2-hydroxypropiophenone, aromatic sulfonyl chlorides such as 2-naphthalenesulfonyl chloride, and photoactive oximes such as 1-phenyl-1,1-propanedione-2-(o-ethoxycarbonyl)oxime. Generally, the photoinitiator is present in an amount of 0.01 to 1 weight percent based on the weight of the monomers and tackifying agent.

The mixture of the polymerizable monomers and the tackifying resin contains a crosslinking agent to increase the shear strength of the adhesive. Useful crosslinking agents include substituted triazines such as 2.4-bis(trichloromethyl)-6-p-methoxystyryl-s-triazine and the chromophore-substituted halomethyl-s-triazines disclosed in U.S.-A-4,329,384 and US-A-4,330,590 (Vesley). Other useful crosslinking agents include multifunctional alkyl acrylate monomers such as trimethylolpropane triacrylate, pentaerythritol tetraacrylate, 1,2-ethylene glycol diacrylate, 1,6-hexanediol diacrylate, and 1,12-dodecanediol diacrylate. Each of the crosslinking agents is useful in the range of 0.01 to 1 weight percent of the total weight of the monomers and tackifying agent. The adhesive layer is usually sufficiently crosslinked when, on attempting to dissolve in heptane, the insoluble gel fraction exceeds 40%.

Other materials which can be blended with the polymerizable monomer/tackifying resin mixture include reinforcing agents, fire retardants, foaming agents, and glass and polymeric microbubbles. If the microbubbles, generally having an average diameter of 10 to 200 micrometers, comprise 5 to 65 volume percent of the pressure-sensitive adhesive, the polymerized product will have a foam-like appearance and be suitable for uses to which foam-backed pressure-sensitive are put, such as, for example, those applications requiring adhesion to low energy substrates such as polyethylene and polypropylene, and high solids automotive paint systems which are coming into widespread use to reduce air polution.

The pressure-sensitive adhesive of the invention is preferably prepared by premixing together the polymerizable monomers, i.e., the alkyl acrylate monomer and the polar copolymerizable monomer, and photoinitiator. This premix is then partially polymerized to a viscosity in the range of 500 to 50,000 cp to achieve a coatable syrup. Alternatively the monomers can be mixed with a thixotropic agent such as fumed silica to achieve a coatable syrup. The tackifying resin is then dissolved into this syrup. Additional photoinitiator and photocrosslinking agent may also be dissolved into the syrup.

This composition is coated onto a flexible carrier web and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in air using fluorescent-type ultraviolet lamps which generally have an intensity of about one watt per lineal inch (1 watt per 2.54 lineal centimeters). If, instead of covering the polymerizable coating, the photopolymerization is to be carried out in an inert atmosphere, the permissible oxygen content of the inert atmosphere can be increased by mixing into the polymerizable composition an oxidizable tin compound as taught in U.S. Patent No. 4,303,485 (Levens), which also teaches that by doing so, thick coatings can be polymerized in air.

Test procedures used in the examples to evaluate pressure-sensitive adhesives include the following:

Monomer Conversion Test

The refractive indices of the unpolymerized monomer, i.e., 0% conversion, ($RI_m$), the fully polymerized monomer, i.e., 100% conversion, ($RI_p$), and the sample on which conversion is to be determined ($RI_s$), are measured using a Bausch and Lomb Refractometer Model No. 33.45.71 at 30°C. The percent conversion is calculated using the formula:

$$\frac{RI_s - RI_m}{RI_p - RI_m} \times 100 = \% \text{ conversion}$$

5

180° Peel Adhesion Test

One side of the adhesive sample is laminated to a 0.05 mm thick aluminum foil backing. Strips of the foil-laminated adhesive are cut to form pressure-sensitive adhesive tape 2.54 cm in width. A 15 cm long piece of the tape is adhered to a 5 cm wide, 12.7 cm long sheet of test substrate such as stainless steel, polypropylene, or acrylonitrile/butadiene/styrene with a free end of the tape extending beyond the end of the test substrate. The sample is rolled twice with a 2-kg hard rubber roller to ensure contact between the adhesive and the test substrate. The free end of the tape is attached to a scale and the tape is removed from the test substrate by moving the test substrate at a rate of 30.5 cm/min.

Breakaway/Continuous Peel Test

A 12.7 mm x 200 mm pressure-sensitive adhesive transfer tape, carried on a release liner, is aligned squarely over the 15 mm x 150 mm face of a rigid polyvinyl chloride test bar about 6 mm thick and pressed firmly into place by rolling once with a 6.8 kg roller. The liner is then removed from the tape, and the exposed adhesive surface aligned in the center of a freshly painted steel panel approximately 100 mm x 300 mm, with one end of the test bar extending beyond the end of the panel. After rolling the test bar with a 6.8 kg (15 pound) roller at the rate of about 300 mm/minute to ensure good contact, the specimen is allowed to age for any desired period of time and then trimmed to a width of approximately 50 mm. The specimen is then clamped in a horizontal fixture mounted in the lower jaw of a tensile testing machine. A metal bar approximately 8 mm thick and having an opening at one end corresponding to the cross section of the vinyl test bar is slipped over the extended end of the test bar, and the opposite end gripped in the upper jaw of the tensile testing machine. The jaws are then separated at 30.5 cm/minute, noting both the force ("Breakaway Peel value") required to initiate separation of the vinyl test bar from the painted panel and the force ("Continuous Peel Value") required to continue the separation until the bar is completely removed.

Shear Test

A strip of tape is adhered by its adhesive to a stainless steel plate under the weight of a 2-kg hard rubber roller with a free end of the tape extending beyond the plate and the adhesive contact area being 2.54 cm x 2.54 cm. After 30 minutes, the plate is placed in an oven preheated to 70°C and positioned 2° from the vertical to prevent peeling. After 10 minutes in the oven, a 1 kg mass is suspended from the free end, and the time at which the mass falls is noted. Alternatively, the sample may be conditioned at room temperature (about 22°C) for 30 minutes, then suspending the 1 kg mass from the free end of the tape, and noting the time at which the mass falls. The test is discontinued if the tape has not failed after 10,000 minutes.

To further illustrate this invention, the following nonlimiting examples are provided. In these examples, all percentages and parts are by weight unless otherwise indicated.

The t-butyl styrene tackifying resin used in the following examples was prepared as follows:

To a dry, two-necked, 1-liter, round-bottomed flask were added 500 ml of dry cyclohexane under an inert argon atmosphere. The cyclohexane was then titrated for proton donating impurities, e.g., water, alcohol, etc., by the addition of $5 \times 10^{-5}$ moles of 1,1-diphenylethylene. Sec-butyl lithium initiator (1.4M in hexane) was slowly added dropwise until a permanent faint yellow color became evident and this solution was stirred for one hour. The solution was then back-titrated with cyclohexane containing a trace amount of water until the yellow color disappeared. Under an inert argon atmosphere, 47.6 mls additional sec-butyl lithium initiator (1.4M in hexane) were then added to the flask. A water bath was placed under the flask and 114.9 g of dry t-butyl styrene were added to the flask. Polymerization began as evidenced by a reaction exotherm and the solution becoming bright red-orange in color due to carbanion formation. The reaction temperature rose to 60°C and was held at 60°C for one hour to produce a deep red t-butyl styrene polymer solution. A 10-percent molar excess of methanol based on the sec-butyl lithium concentration used for polymerization was added to the solution and allowed to react to convert the t-butyl styryl lithium end groups at the terminal portions of the polymer chains to hydrogen atoms. The t-butyl styrene polymer was isolated by precipitation in methanol, washed with water, and vacuum dried to give a 95% yield of a dry, white, powdery solid having a number average molecular weight of 1200, a polydispersity index of 1.11, and a glass transition temperature of 65°C.

An acrylate-terminated t-butyl styrene polymer was prepared as follows: A solution of t-butyl styrene polymer having t-butyl styryl lithium end groups was prepared as described above. Dry ethylene oxide gas was bubbled through the solution to convert the t-butyl styryl lithium end groups to lithium alkoxide end groups. Dry acryloyl chloride (4 ml) was added to the resultant solution to convert the lithium alkoxide end groups to acrylate end groups. This polymer solution was allowed to stand overnight to permit precipitation of the lithium chloride by-product and then filtered to remove the salt. The solution was further evaporated under vacuum yielding a yellow solid product. This product was washed three times with excess hot (60°C) methanol in a blender and filtered. Drying overnight at 40°C in a vacuum oven yielded 53.5 g (88% isolated yield) of a cream colored solid having a number average molecular weight of 1700, a polydispersity index of 1.41, and a glass transition temperature of 84°C.

A carboxylic acid-terminated t-butyl styrene polymer was prepared as follows: A solution of t-butyl styrene polymer having t-butyl styryl lithium end groups was prepared as described above. Half of his solution was added to a cold (-70°C) slurry of Dry Ice™ ($CO_2$) in tetrahydrofuran and reaction was allowed to occur as the solution came to room temperature. A 1% solution of hydrochloric acid in methanol was added to convert the lithium carboxylate to a carboxylic acid end group. The product was isolated by precipitation in methanol, washed with water, and vacuum dried to produce 47 g of a dry, powdery, white solid having a number average molecular weight of 1250, a polydispersity index of 1.11, and a glass transition temperature of 65°C.

A hydroxyl-terminated t-butyl styrene polymer was prepared as follows: A deep red solution of t-butyl styrene polymer having t-butyl styryl lithium end groups was prepared as described above. Dry ethylene oxide gas was bubbled through the solution to provide the polymer with alkoxide end groups. A 1% solution of hydrochloric acid in methanol (5 ml) was then added to the solution to convert the alkoxide end groups to alcohol end groups. The product was isolated by precipitation in methanol, washed with water, and vacuum dried to give a 96% yield of a powdery, white solid having a number average molecular weight of 1200, a polydispersity index of 1.13, and a glass transition temperature of 62°C.

Example 1 and Comparative Examples C1-C4

A premix was prepared using 80 parts isooctyl acrylate, 20 parts N-vinyl pyrrolidone, and 0.04 parts 2,2-dimethoxy-2-phenyl acetophenone photoinitiator (Irgacure™ 651, available from Ciba-Geigy Corp.). This was partially polymerized by exposure to ultraviolet radiation to provide a coatable syrup having a viscosity of about 3000 cps. A blend of 75 parts of the partially polymerized premix, 25 parts of various tackifying resins, as indicated in Table I, and an additional 0.2 parts Irgacure™ 651 was coated onto a first biaxially-oriented 0.05 mm thick polyethylene terephthalate film and covered by a second such film at a knife setting which was adjusted to squeeze the syrup to provide a uniform coating of about 0.127 mm thickness. Comparative Example 1 was prepared without tackifying resin. The surfaces of the first and second films contacting the adhesive composition had low-adhesion release coatings thereon.

The thus-prepared composites were exposed to a bank of Sylvania™ 40-watt ultraviolet fluorescent lamps, model no. F48T12/22011/HO, to provide ultraviolet radiation at a rate of 1 mW/sec/cm$^2$. The conversion factors were determined for each adhesive at the times set forth in Table II.

7

Table I

| Example 1 | Tackifying resin t-BS[a] | $\overline{Mn}$ 1200 | $P_i$ 1.11 | $T_g$(°C) 65 | $\delta$ ( cal/cc)$^{-1/2}$ 8.0 |
|---|---|---|---|---|---|
| C-2 | F85[b] | 740 | 1.14 | 40 | 9.4 |
| C-3 | 7115[c] | 450 | 1.96 | 60 | 7.8 |
| C-4 | A-135[d] | 550 | 1.60 | 98 | 7.8 |

a) anionically polymerized poly(t-butyl styrene) resin
b) Foral 85™, a highly hydrogenated rosin-ester of glycerol available from Hercules, Inc.
c) Zonarez 7115™, a terpene hydrocarbon available from Arizona Chemical Company
d) Piccolyte A135™, a resin derived from d-limonene available from Hercules, Inc.

## Table II

Conversion (%)

| Time (min) | Example: Tackifying resin: | C1 -- | 1 t-BS | C2 F85 | C3 7115 | C4 A135 |
|---|---|---|---|---|---|---|
| 0.25 | | 27.4 | 29.1 | 11.7 | 9.0 | -- |
| 0.50 | | 96.1 | 84.4 | 27.7 | 12.1 | -- |
| 0.75 | | 98.8 | 98.5 | 41.8 | 15.6 | -- |
| 1.0 | | -- | 99.3 | 52.0 | 20.1 | 11.4 |
| 1.5 | | 99.7 | 99.6 | 67.6 | 28.0 | 12.6 |
| 2 | | 100 | 100 | 78.3 | 34.7 | 14.2 |
| 2.5 | | | | 85.9 | 41.1 | -- |
| 3 | | | | 90.1 | 45.0 | -- |
| 4 | | | | 94.7 | 63.2 | 20.2 |
| 5 | | | | 96.2 | 73.9 | -- |

As can be seen from the data in Table II, the tackifying resin of Examples 1 did not substantially inhibit the polymerization of the monomer mixtures, the monomer of this example having a conversion factor of at least 98% when exposed to 120 mj of ultraviolet radiation at a rate of about 1 mW/sec/cm². The adhesives of Comparative Examples C2-C4 exhibited conversion factors only of 78%, 34%, and 14%, respectively, at exposures of about 1 mW/sec/cm² for 2 minutes.

Examples 2-3 and Comparative Examples 5 and 6

Adhesives were prepared as in Example 1, and the tackifying resins were poly(t-butyl styrene) resins having a number average molecular weight of about 1200 and the end groups set forth in Table III and 0.16 weight percent hexanediol diacrylate crosslinking agent was added to the blend. Comparative Example 5 had no added tackifying resin. The adhesive blends were coated onto a 0.05 mm thick polyethylene terephthalate film at a thickness of 0.127 mm. The coated film was immediately subjected to 300 mj of ultraviolet radiation at a rate of 2 mw/sec provided by a bank of Sylvania™ 40-watt fluorescent lamps, model no. F48T12/2011/HO, in an inert nitrogen atmosphere. The polymerized adhesives were tested for 180° peel adhesion to polypropylene film and for shear strength at 70°C. The results are set forth in Table III.

Table III

| Example | End group | 180° peel adhesion (N/dm) | Shear Strength (min) |
|---|---|---|---|
| 2 | -COOH | 158 | 10,000 |
| 3 | -OH | 179 | 10,000 |
| C5 | ---- | 72 | 10,000 |
| C6 | $-OCOCH = CH_2$ | 144 | 106 |

As can be seen from the data in Table III, each of the poly(t-butyl styrene) tackifier resins provided a significant increase in 180° peel adhesion and those resins having the -COOH or -OH end groups did not reduce the shear strength.

Examples 4-6 and Comparative Example C7

Adhesives were prepared as in Examples 2-3, except the monomer content of the premix was 97 parts isooctyl acrylate and 3 parts acrylic acid. Comparative Example C7 had no added tackifying resin. The adhesives were photopolymerized and tested as in Examples 2-3. The results are shown in Table IV.

Table IV

| Example | End group | 180° peel adhesion (N/dm) |
|---|---|---|
| 4 | $-OCOCH = CH_2$ | 92 |
| 5 | -COOH | 79 |
| 6 | -OH | 97 |
| C7 | --- | 72 |

As can be seen from the data in Table IV, the t-butyl styrene tackifying resins provide an increase in peel adhesion.

Example 7 and Comparative Examples

Premixes were prepared containing isooctyl acrylate (IOA) and N-vinyl pyrrolidone (NVP) in the amounts set forth in Table V. To each premix was added 0.04 parts Irgacure™ 651 photoinitiator and the premix was polymerized to a coatable viscosity of about 1000 cps. Into the partially polymerized premixes were dissolved 0.2 parts additional Irgacure™ 651 photoinitiator and varying amounts of tackifying resin and hexanediol diacrylate (HDDA) crosslinking agent in the amounts set forth in Table V. The thus-prepared compositions were coated onto polyethylene terephthalate film, polymerized by ultraviolet radiation, and tested as in Examples 2-3 except that ultraviolet radiation at a rate of 2 mW/sec/cm$^2$ was used. In all Comparative Examples adhesives were similarly prepared except no tackifying resin was added. The adhesives were tested for 180° peel adhesion to polypropylene sheet (PP), a low energy surface, acrylonitrile/butadiene/styrene sheet (ABS), a moderate energy surface, and stainless steel (SS), a high energy surface, and for shear strength at 70°C. The results together with the adhesive compositions are shown in Table V. Comparative Examples are marked 'C'.

Table V

|  | Premix | | Adhesive composition | | | 180° Peel adhesion (N/dm) | | | Shear Strength (min) |
|---|---|---|---|---|---|---|---|---|---|
|  | IOA (parts) | NVP (parts) | Premix (parts) | t-BS (parts) | HDDA (parts) | PP | ABS | SS | |
|  | 85 | 15 | 80 | 20 | 0.12 | 103 | 121 | 90 | 117 |
|  | 85 | 15 | 80 | 20 | 0.18 | 105 | 91 | 92 | 10,000 + |
|  | 85 | 15 | 70 | 30 | 0.12 | 186 | 193 | 201 | 38 |
|  | 85 | 15 | 70 | 30 | 0.18 | 182 | 193 | 190 | 67 |
|  | 85 | 15 | 100 | -- | 0.12 | 71 | 79 | 82 | 68 |
| 'C' | 85 | 15 | 100 | -- | 0.18 | 64 | 54 | 30 | 44 |
|  | 80 | 20 | 75 | 25 | 0.09 | 175 | 186 | 184 | 96 |
|  | 80 | 20 | 75 | 25 | 0.15 | 182 | 185 | 193 | 2,370 |
| 'C' | 80 | 20 | 100 | -- | 0.15 | 67 | 72 | 42 | 530 |
|  | 80 | 20 | 75 | 25 | 0.21 | 162 | 151 | 166 | 10,000 + |
|  | 75 | 25 | 80 | 20 | 0.12 | 164 | 162 | 168 | 6,000 |
|  | 75 | 25 | 80 | 20 | 0.18 | 158 | 166 | 175 | 10,000 + |
|  | 75 | 25 | 70 | 30 | 0.12 | 188 | 70 | 72 | 109 |
|  | 75 | 25 | 70 | 30 | 0.18 | 149 | 109 | 48 | 8,000 |
| 'C' | 70 | 30 | 100 | -- | 0.12 | 85 | 67 | 54 | 10,000 + |
| 'C' | 70 | 30 | 100 | -- | 0.18 | 91 | 53 | 48 | 10,000 + |

As can be seen from the data in Table V , increasing the amount of tackifying resin generally increases the 180° peel adhesion, but reduces the shear strength of the adhesive. The shear strength can generally be increased by increasing the amount of N-vinyl pyrrolidone in the premix and/or increasing the amount of crosslinking agent.

Example 8 and Comparative Examples

Premixes were prepared containing isooctyl acrylate (IOA) and acrylic acid (AA) in the amounts set forth in Table VI. To each premix was added 0.04 parts Irgacure™ 651 photoinitiator and the premix was polymerized to a coatable viscosity of about 1000 cps. Into the partially polymerized premixes were dissolved 0.2 parts additional Irgacure™ 651 and varying amounts of anionically polymerized poly(t-butyl styrene) tackifying resin (t-BS) and hexanediol diacrylate crosslinking agent (HDDA) in the amounts set forth in Table VI. The thus-prepared compositions were coated onto polyethylene terephthalate film and polymerized in nitrogen atmosphere using ultraviolet radiation as in examples 2-3 except that ultraviolet radiation at a rate of 2 mW/sec/cm$^2$ was used. The thus-prepared adhesives were tested for 180° peel adhesion to polypropylene sheet (PP), acrylonitrile/butadiene/styrene sheet (ABS), and stainless steel (SS) and for shear strength at 70°C. The results are set forth in Table VI. The Comparative Examples prepared without the addition of the t-butyl styrene tackifying resin were also tested for peel adhesion and shear strength, the results of which are set forth in Table VI. Comparative Examples are marked 'C'.

Table VI

| | Premix | | Adhesive composition | | | 180° Peel adhesion (N/dm) | | |
|---|---|---|---|---|---|---|---|---|
| | IOA (parts) | AA (parts) | Premix (parts) | t-BS (parts) | HDDA (parts) | PP | ABS | SS |
| | 97 | 3 | 80 | 20 | 0.15 | 67 | 81 | 19 |
| | 97 | 3 | 70 | 30 | 0.15 | 140 | 142 | 142 |
| 'C' | 97 | 3 | 100 | -- | 0.15 | 64 | 68 | 38 |
| | 97 | 3 | 70 | 30 | 0.25 | 102 | 94 | 77 |
| | 96 | 4 | 85 | 15 | 0.20 | 70 | 70 | 70 |
| | 96 | 4 | 75 | 25 | 0.20 | 131 | 98 | 142 |
| | 96 | 4 | 65 | 35 | 0.20 | 114 | 101 | 156 |
| 'C' | 96 | 4 | 100 | -- | 0.20 | 56 | 55 | 46 |
| | 95 | 5 | 80 | 20 | 0.25 | 86 | 90 | 70 |
| | 95 | 5 | 70 | 30 | 0.25 | 79 | 92 | 91 |
| 'C' | 95 | 5 | 100 | -- | 0.25 | 52 | 69 | 53 |

As can be seen from the data in the Table, an increase in the amount of tackifying resin generally increases the 180° peel adhesion of the adhesive. Increasing the amount of the acrylic acid and/or the crosslinking agent tends to reduce the 180° peel adhesion.

Example 9 and Comparative Examples

In this Example, premixes were prepared containing isooctyl acrylate (IOA) and N-vinyl pyrrolidone (NVP) in the amounts set forth in Table VII. To each premix was added 0.04 parts Irgacure™ 651 photoinitiator and the premix was polymerized to a coatable viscosity of about 1000 cps. Into the partially polymerized premixes were dissolved 0.1 part additional Irgacure™ 651 photoinitiator, 8 parts glass microbubbles, 0.21 parts hexanediol diacrylate, and 20 parts anionically polymerized t-butyl styrene tackifying agent (t-BS). The resulting mixture was thoroughly mixed with an air stirrer, degassed in a desiccator using a vacuum pump, and fed to the nip of a knife coater between a pair of transparent, biaxially-oriented polyethylene terephthalate films, the facing surfaces of which had low-adhesion coatings. The knife coater was adjusted to provide a coating thickness of approximately 1 mm. The composite emerging from the knife coater was exposed to ultraviolet radiation as in Examples 2-3. After peeling off one of the transparent films covering the resultant foam-like pressure-sensitive adhesive to provide a transfer tape, the transfer tape was tested for breakaway peel value and continuous peel value using a steel panel having duPont RK-3841™ basecoat/clearcoat high solids flexible urethane high-solids automotive paint freshly painted thereon. The Comparative Examples were prepared and tested as the Examples except no tackifying agent was added. The results are set forth in Table VII.

Table VII

| Example | Premix | | t-BS (parts) | Breakaway peel value (N/dm) | Continuous peel value (N/dm) |
|---|---|---|---|---|---|
| | IOA (parts) | NVP (parts) | | | |
| | 80 | 20 | 25 | 1197 | 422 |
| Comparative | 80 | 20 | -- | 810 | 246 |
| | 75 | 25 | 20 | 1232 | 422 |
| Comparative | 75 | 25 | -- | 1021 | 317 |

Example 10

Transfer tapes were prepared as in Examples 9 using the amounts of isooctylacrylate (IOA), n-vinyl pyrrolidone (NVP), and anionically polymerized t-butyl styrene set forth in Table VIII. The transfer tapes were tested for breakaway peel value and continuous peel value using steel panels having PPG DC-2000™ basecoat/clearcoat (marked PPG or Ford 50J107A™ (marked Ford) enamel high solids automotive paint freshly painted thereon. The results are set forth in Table IX.

Table VIII

|  | IOA (parts) | NVP (parts) | t-BS (parts) | Breakaway peel valve (N/dm) | Continuous peel valve (N/dm) |
|---|---|---|---|---|---|
| PPG | 80 | 20 | 25 | 1162 | 352 |
| PPG | 75 | 25 | 20 | 1126 | 405 |
| Ford | 80 | 20 | 25 | 1267 | 440 |
| Ford | 75 | 25 | 20 | 1162 | 510 |

## Claims

1. A pressure-sensitive adhesive comprising; (a) 50 to 95 parts by weight of an ultraviolet radiation polymerised polymer of (i) one or more monomers which are alkyl acrylates, the alkyl groups of which have an average of 4 to 12 carbon atoms and (ii) from 2 to 15 parts by weight of 100 parts of said ultraviolet radiation polymerized polymer of one or more strongly polar copolymerizable monomers selected from acrylic acid, itaconic acid, hydroxyalkyl acrylates, cyanoalkyl acrylates, acrylamides and substituted acrylamides or from 5 to 30 parts by weight of 100 parts of said ultraviolet radiation polymerized polymer of one or more moderately polar copolymerizable monomers selected from N-vinyl pyrrolidone, N-vinyl caprolactam, acrylonitrile, vinyl chloride, vinylidene chloride and diallyl phthalate; further comprising from 0.01 to 1 weight percent of a crosslinking agent based on the weight of the polymerizable monomers and tackifying agent; and (b) 5 to 50 parts by weight of anionically polymerized poly (t-butyl styrene) tackifying resin, and said adhesive having a monomer conversion factor of at least 95%.

2. The pressure-sensitive adhesive of any preceding claim further comprising from 0.01 to 1 weight percent of a photoinitiator based on the weight of the polymerizable monomers and tackifying agent.

3. The pressure-sensitive adhesive of any preceding claim further comprising from 5 to 65 volume percent microbubbles, said microbubbles having an average diameter of from 10 to 200 $\mu$m (microns).

4. A pressure-sensitive adhesive tape comprising a flexible carrier web having the pressure-sensitive adhesive of any preceding claim adhered to at least one surfact of said web.

5. A pressure-sensitive transfer tape comprising a flexible carrier web having the pressure-sensitive adhesive of any one of claims 1 to 3 releasably adhered to one surface of said web.

## Patentansprüche

1. Haftklebstoff, umfassend: (a) 50 bis 95 Gewichtsteile eines durch Ultraviolettstrahlung polymerisierten Polymers von (i) einem oder mehreren Monomeren, die Alkylacrylate sind, deren Alkylgruppen durchschnittlich 4 bis 12 Kohlenstoffatome aufweisen, und (ii) von 2 bis 15 Gewichtsteile von 100 Teilen des durch Ultraviolettstrahlung polymerisierten Polymers mit einem oder mehreren stark polaren copolymerisierbaren Monomeren, die ausgewählt werden aus: Acrylsäure, Itaconsäure, Hydroxyalkylacrylate, Cyanoalkylacrylate, Acrylamide und substituierte Acrylamide, oder von 5 bis 30 Gewichtsteile von 100 Teilen des durch Ultraviolettstrahlung polymerisierten Polymers von einem oder mehreren mäßig polaren copolymerisierbaren Monomeren, die ausgewählt werden aus N-Vinylpyrrolidon, N-Vinylcaprolactam, Acrylonitril, Vinylchlorid, Vinylidenchlorid und Diallylphthalat, ferner umfassend von 0,01 bis 1 Gew.% eines Vernetzungsmittels, bezogen auf das Gewicht der polymerisierbaren Monomere und des Klebrigmachers; sowie (b) 5 bis 50 Gewichtsteile von anionisch polymerisiertem Poly-(t-butylstyrol)-klebrigmachendem Harz und dem Klebstoff, der einen Monomer-Umwandlungsfaktor von mindestens 95 % hat.

2. Haftklebstoff nach dem vorstehenden Anspruch, ferner umfassend einen Photoinitiator von 0,01 bis 1 Gew.% bezogen auf das Gewicht der polymerisierbaren Monomere und des Klebrigmachers.

3. Haftklebstoff nach einem der vorstehenden Ansprüche, ferner umfassend Mikrobläschen von 5 bis 65 Vol.%, wobei die Mikrobläschen einen mittleren Durchmesser von 10 bis 200 $\mu$m (Mikrometer) aufweisen.

4. Haftklebeband, umfassend eine flexible Trägerbahn mit dem auf mindestens einer der Oberflächen der Bahn aufgeklebten Haftklebstoff nach einem der vorstehenden Ansprüche.

5. Haftklebertransferband, umfassend eine flexible Trägerbahn mit auf einer der Oberflächen der Bahn ablösbar aufgeklebtem Haftklebstoff nach einem der Ansprüche 1 bis 3.

**Revendications**

1. Adhésif sensible à la pression, comprenant : (a) de 50 à 95 parties en poids d'un polymère polymérisé par rayonnement ultraviolet, constitué par (i) un ou plusieurs monomères qui sont des acrylates d'alkyle, dont les groupes alkyles ont en moyenne de 4 à 12 atomes de carbone, et (ii) de 2 à 15 parties en poids, pour 100 parties dudit polymère polymérisé par rayonnement ultraviolet, d'un ou plusieurs monomères copolymérisables fortement polaires, choisis dans l'ensemble constitué par l'acide acrylique, l'acide itaconique, des acrylates d'hydroxyalkyle, des acrylates de cyanoalkyle, des acrylamides et des acrylamides substitués, ou de 5 à 30 parties en poids, pour 100 parties dudit polymère polymérisé par rayonnement ultraviolet, d'un ou plusieurs monomères copolymérisables moyennement polaires, choisis dans l'ensemble constitué par la N-vinylpyrrolidone, le N-vinylcaprolactame, l'acrylonitrile, le chlorure de vinyle, le chlorure de vinylidène et le phtalate de diallyle ; comprenant, en outre, de 0,01 à 1 % en poids d'un agent de réticulation, par rapport au poids des monomères polymérisables et d un agent adhésif ; et (b) de 5 à 50 parties en poids d'une résine collante de poly(t-butylstyrène) polymérisée de manière anionique, et ledit adhésif a un facteur de conversion des monomères d'au moins 95 %.

2. Adhésif sensible à la pression selon la revendication 1, comprenant, en outre, de 0,01 à 1 % en poids d'un photo-initiateur, par rapport au poids des monomères polymérisables et de l'agent adhésif.

3. Adhésif sensible à la pression selon l'une quelconque des revendications précédentes, comprenant, en outre, de 5 à 65 % en volume de microbulles qui ont un diamètre moyen allant de 10 à 200 $\mu$m (microns).

4. Ruban adhésif sensible à la pression, comprenant un tissu souple de support comportant l'adhésif sensible à la pression selon l'une quelconque des revendications précédentes collé sur au moins une de ses surfaces.

5. Ruban de transfert sensible à la pression, comprenant un tissu souple de support comportant l'adhésif sensible à la pression selon l'une quelconque des revendications 1 à 3 collé de manière amovible sur une de ses surfaces.